# EUROPEAN PATENT APPLICATION

(11) **EP 2 562 700 A2**
(43) Date of publication of application: **27.02.2013**
(21) Application number: 12004459.9
(22) Date of filing: 13.06.2012
(51) Int. Cl.: G06Q 10/04

(54) **Method and system for optimization of resources**

(30) Priority: 13.06.2011 IN MA19862011
(71) Applicant: Infosys Limited, Karnataka (IN)
(72) Inventor: Joshi, Dinesh Govind, Bhayander East Thane 401105 (IN); Nath, Subhashis, Bangalore 560076 Karnataka (IN); Kulshreshtha, Anupam, Bangalore 560 068 Karnataka (IN); Shivaram, Mahesh Huyilalu, Bangalore 560 068 Karnataka (IN); Aradhya, Vinoop, Bangalore 560 078 Karnataka (IN); Kumar, Nagaraj Vijaya, Bangalore 560 082 Karnataka (IN)
(74) Representative: Bosch, Matthias

(57) **Abstract**

A method of optimization of resources is provided. The method comprises receiving data related to one or more predetermined parameters and one or more rules for optimization of one or more resources. The method further comprises encoding the received data. In addition, the method comprises generating one or more objective functions, one or more constraints, and one or more output indicators using the received data and the encoded data. Further, the method comprises generating one or more models and sub-models corresponding to the one or more resources. Furthermore, the method comprises generating one or more optimization results associated with the one or more sub-models using a distributed computing framework. Finally, the method comprises generating an aggregated optimized result which is used for optimization of the one or more resources.

## Description

### Field of the invention

The present invention relates generally to an optimization technique. More particularly, the present invention provides a method and system for an effective optimization of resources across various industries.

### Background of the invention

Lack of efficient optimization of resources is a big economic problem existing in today's society. Further, due to scarcity of one or more resources the need to optimize the resources becomes even more important task to be dealt with. Optimization challenges exist in various industries such as retail, manufacturing, logistics, banking, financial management, etc. These challenges are related to planning, allocation, assortment, distribution and selection of resources pertaining to various industries.

Conventionally, various methods and systems exist for the optimization of one or more resources to overcome the above-mentioned challenges. For example, in retail industry various shelf space optimization techniques exist to facilitate optimization of retail shelf space. However, the existing optimization techniques suffer from various disadvantages such as the solutions are not automated enough that can be readily implemented to optimize one or more resources. Further, the existing techniques do not provide an integrated view of the retail space which is being optimized. Also, response time to obtain optimized results is high especially when space pertaining to thousands of retail shelves is being optimized. In addition, it is not possible to incorporate additional business rules at run-time and provide an optimized solution. Moreover, the existing optimizing solutions for retail industry cannot be used to optimize resources of another industry.

In light of the above-mentioned disadvantages, there is a need for an efficient method and system for optimizing resources across various industries. In addition, there is a need for a method and system for optimizing resources with minimal response time. Further, there is a need for a scalable and flexible method and system for optimization of resources. Furthermore, a method and system for providing an integrated and comprehensive solution for optimizing resources for various industries is required.

### Summary of the invention

A system for optimization of resources is provided. The system comprises a receiving engine configured to receive data related to one or more predetermined parameters and one or more rules for optimization of one or more resources. The system further comprises an s-cell and s-grid generator configured to encode the received data related to the one or more predetermined parameters into one or more s-cells of one or more s-grids to obtain encoded data. Further, the system comprises an objective function generator configured to generate one or more objective functions using the received data and the encoded data. Furthermore, the system comprises a constraints generator configured to generate one or more constraints using the received data and the encoded data. Also, the system comprises an output generator configured to generate one or more output indicators using the received data and the encoded data. The system further comprises a model generator configured to generate one or more models corresponding to the one or more resources. The model generator generates the one or more models by aggregating the received data, the encoded data, the generated one or more objective functions, the generated one or more constraints and the generated one or more output indicators. In addition, the system comprises a model parallelizer configured to obtain one or more sub-models from the generated one or more models by splitting the one or more generated models. The system further comprises an optimization controller configured to generate one or more optimization results associated with the one or more sub-models. The optimization controller generates the one or more optimization results by processing the one or more sub-models using a distributed computing framework. Finally, the system comprises an aggregator configured to aggregate the one or more optimization results associated with the one or more sub-models to generate an aggregated optimized result, wherein the aggregated optimized result is used for optimization of the one or more resources.

In an embodiment of the present invention, the one or more resources to be optimized comprise: retail resources, cargo resources, pecuniary resources, human resources, hardware resources, network resources, software resources and infrastructure resources. In an embodiment of the present invention, the aggregated optimized result comprises at least one of: an allocation plan of products, a placement plan of products, an assortment plan of products and a distribution plan of products. In an embodiment of the present invention, the system further comprises a post aggregation transformation engine configured to transform the aggregated optimized result into one or more predetermined formats for rendering the aggregated optimized result on one or more display devices. The one or more predetermined formats comprise at least one of: planograms, reports, graphs and layouts. In an embodiment of the present invention, the system further comprising an avatars generator to generate at least one of: a two dimensional and a three dimensional visual representation of the one or more optimization results. The avatars generator facilitates generating visual representation using at least one of: the received data, the encoded data, the generated one or more objective functions and the generated one or more constraints.

A method of optimization of resources using a microprocessor, wherein the microprocessor is operable to execute a sequence of instructions, is provided. The method comprises receiving data related to one or more predetermined parameters and one or more rules for optimization of one or more resources. The method further comprises encoding the received data related to the one or more predetermined parameters into one or more s-cells of one or more s-grids to obtain encoded data. Further, the method comprises generating one or more objective functions, one or more constraints, and one or more output indicators using the received data and the encoded data. Furthermore, the method comprises generating one or more models corresponding to the one or more resources. The one or more models are generated by aggregating the received data, the encoded data, the generated one or more objective functions, the generated one or more constraints and the generated one or more output indicators. Also, the method comprises obtaining one or more sub-models from the generated one or more models by splitting the one or more generated models. In addition, the method comprises generating one or more optimization results associated with the one or more sub-models. The one or more optimization results are obtained by processing the one or more sub-models using a distributed computing framework. Finally, the method comprises aggregating the one or more optimization results associated with the one or more sub-models to generate an aggregated optimized result. The aggregated optimized result is used for optimization of the one or more resources.

In an embodiment of the present invention, the one or more resources to be optimized comprise: retail resources, cargo resources, pecuniary resources, human resources, hardware resources, network resources, software resources and infrastructure resources. In an embodiment of the present invention, the aggregated optimized result comprises at least one of: an allocation plan of products, a placement plan of products, an assortment plan of products and a distribution plan of products. Further, the aggregated optimized result is transformed into one or more predetermined formats for rendering the aggregated optimized result on one or more display devices. The one or more predetermined formats comprise at least one of: planograms, reports, graphs and layouts. In an embodiment of the preset invention, the splitting of the one or more generated models to obtain the one or more sub-models is achieved by a parallelization scheme. In an embodiment of the present invention, the parallelization scheme comprises at least one of: an explicit parallelization scheme and an implicit parallelization scheme. In an embodiment of the present invention, the distributed computing framework is at least one of: a cloud computing framework and a grid computing framework. In an embodiment of the present invention, encoding the data related to each of the one or more predetermined parameters occurs on a predefined axis of the one or more s-cells of the one or more s-grids. In an embodiment of the present invention, each parameter of the one or more predetermined parameters has at least one associated dimension and each dimension has at least one associated hierarchy. In an embodiment of the present invention, the method further comprising the step of generating at least one of: a two dimensional and a three dimensional visual representation of the one or more optimization results. The visual representation is generated using at least one of: the received data, the encoded data, the generated one or more objective functions and the generated one or more constraints.

### Brief description of the accompanying drawings

The present invention is described by way of embodiments illustrated in the accompanying drawings wherein:

FIG. 1 is a block diagram illustrating a system for optimization of resources in accordance with an embodiment of the present invention;

FIG. 2 illustrates a detailed block diagram of a constraints generator in accordance with an embodiment of the present invention;

FIG. 3 illustrates a detailed block diagram of an optimization controller in accordance with an embodiment of the present invention;

FIG. 4 illustrates an exemplary computer system for optimization of resources in accordance with an embodiment of the present invention; and

FIGS. 5A and 5B is a flowchart illustrating a method for optimization of resources in accordance with an embodiment of the present invention.

### Detailed description of the invention

A system and method for optimization of resources is described herein. The invention provides a method and system for optimization of resources across various domains corresponding to different industries. Further, the invention provides a method and system for generating models and sub-models corresponding to the resources to be optimized based on one or more rules and parameters. The invention further provides a method and system for generation of optimized solutions based on the models and sub-models. Furthermore, the invention provides for obtaining integrated and comprehensive solutions for optimization of resources across various industries.

The following disclosure is provided in order to enable a person having ordinary skill in the art to practice the invention. Exemplary embodiments are provided only for illustrative purposes and various modifications will be readily apparent to persons skilled in the art. The general principles defined herein may be applied to other embodiments and applications without departing from the spirit and scope of the invention. Also, the terminology and phraseology used is for the purpose of describing exemplary embodiments and should not be considered limiting. Thus, the present invention is to be accorded the widest scope encompassing numerous alternatives, modifications and equivalents consistent with the principles and features disclosed. For purpose of clarity, details relating to technical material that is known in the technical fields related to the invention have not been described in detail so as not to unnecessarily obscure the present invention.

The present invention would now be discussed in context of embodiments as illustrated in the accompanying drawings.

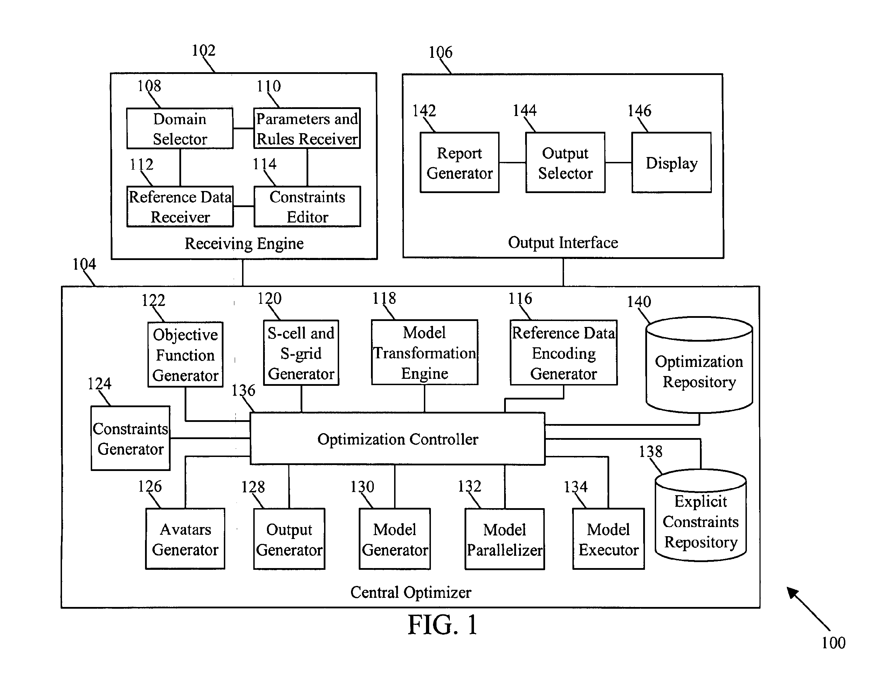

FIG. 1 is a block diagram illustrating a system 100 for optimization of resources in accordance with an embodiment of the present invention. The system 100 comprises a receiving engine 102, a central optimizer 104, and an output interface 106.

The receiving engine 102 is a front end interface that is configured to receive data from one or more users. The one or more users enter data related to one or more predetermined parameters and one or more rules related to one or more resources that are to be optimized. In various embodiments of the present invention, the receiving engine 102 is an interactive interface such as, but not limited to, a Graphical User Interface (GUI) and a character user interface. In an embodiment of the present invention, the receiving engine 102 receives data from the one or more users via an electronic communication device including, but not limited to, a desktop, a notebook, a laptop, a mobile phone and a Personal Digital Assistant (PDA). In an embodiment of the present invention, the data received by the receiving engine includes, but not limited to, data related to the one or more predetermined parameters, the one or more rules, data related to one or more objectives, reference data related to the one or more predetermined parameters and data related to one or more avatars of the one or more predetermined parameters. The receiving engine 102 further comprises a domain selector 108, a parameters and rules receiver 110, a reference data receiver 112 and a constraints editor 114.

The domain selector 108 facilitates the one or more users to select a particular domain to optimize the one or more resources belonging to the selected domain. The one or more domains include, but not limited to, retail, cargo, warehouse, office administration and banking. Further, the domain selector 108 facilitates the one or more users to select the one or more resources belonging to the selected domain that are to be optimized. The one or more resources to be optimized include, but not limited to, retail resources, cargo resources, pecuniary resources, human resources, hardware resources, network resources, software resources and infrastructure resources belonging to a particular domain. In an embodiment of the present invention, the retail resources include retail shelf space, floor space, etc. In another embodiment of the present invention, pecuniary resources include, but not limited to, budget, stocks, bonds, funds, etc. The domain selector 108 facilitates determining the one or more parameters that are required for optimization of the one or more resources belonging to the selected domain.

In an exemplary embodiment of the present invention, the one or more users select the retail option from the various domains provided by the domain selector 108. The one or more users further select option to optimize retail shelf space. The retail shelf space optimization aims at optimizing space of shelves in a retail store by providing optimized solutions for optimization challenges related to placement, assortment and allocation of products on shelves. In an embodiment of the present invention, the domain selector 108 facilitates populating the one or more predetermined parameters associated with the shelf space optimization option selected by the one or more users. The one or more predetermined parameters associated with the retail shelf space optimization option include, but not limited to, products, fixtures, shelves, and product sections. In an embodiment of the present invention, the one or more predetermined parameters are pre-stored in an optimization repository 140.

The parameters and rules receiver 110 facilitates the one or more users to input data related to the one or more predetermined parameters and one or more rules for optimizing the one or more resources related to the selected domain. In an embodiment of the present invention, the data related to the one or more predetermined parameters include, but not limited to, number of predetermined parameters, parameter type, parameter identification values, etc. The one or more rules entered by the one or more users are related to the selected domain. In an embodiment of the present invention, the one or more users select one or more rules from various pre-stored rules related to the selected domain. The various pre-stored rules are stored in the optimization repository 140 prior to optimization of the one or more resources.

The parameters and rules receiver 110 also facilitates the one or more users to provide an objective function guidance to facilitate generating one or more objective functions by an objective function generator 122. Further, the objective function guidance contains information related to the one or more objectives that the one or more user wants to achieve related to the one or more resources to be optimized. The one or more objective functions are mathematical functions related to the one or more objectives that the one or more users wants to achieve. Further, the one or more objective functions are related to the one or more predetermined parameters and relationship between the one or more predetermined parameters.

In an embodiment of the present invention, the optimization repository 140 also stores one or more domain independent rules. The one or more domain independent rules are used to create the one or more rules related to a particular domain.

In an exemplary embodiment pertaining to retail shelf space optimization, the parameters and rules receiver 110 facilitates the one or more users to enter data related to products, shelves, fixtures and product sections which includes data such as, but not limited to, number of products, number of shelves, number of fixtures, number of product sections, product types and categories, section types, product identification values etc. In an embodiment of the present invention, the one or more rules include, but not limited to, minimum facings of a product on a shelf, maximum number of products on a fixture, minimum number of top selling products for a shelf, minimum number of products from a particular brand, etc. In an embodiment of the present invention, the parameters and rules receiver 110 facilitate the one or more users to provide the objective function guidance which includes information related to the one or more objectives to be achieved such as, but not limited to, maximizing profit, maximizing revenue and maximizing sales.

The reference data receiver 112 facilitates the one or more users to enter the reference data related to the one or more predetermined parameters. In an embodiment of the present invention, the reference data includes data related to, but not limited to, the one or more predetermined parameters, characteristics of the one or more predetermined parameters and the one or more avatars of the one or more predetermined parameters. The one or more avatars are two-dimensional and three-dimensional visual representation of the one or more pre-determined parameters. In an embodiment of the present invention, the one or more users can select the one or more avatars from one or more pre-created avatars via the reference data receiver 112. Further, the one or more users select the one or more avatars based on the one or more users preferences such as, but not limited to, particular product placement during festive season, particular product placement based on the gender and age of target customers, particular product placement based on location of the retail store etc. The one or more pre-created avatars are stored in the optimization repository 140. The one or more users create the one or more avatars of the one or more predetermined parameters via avatars editor (not shown). The one or more users can also enter the reference data related to the one or more avatars to facilitate creating the one or more avatars by an avatars generator 126. In various embodiments of the present invention, the reference data related to the one or more avatars of the one or more predetermined parameters facilitate complexity reduction during processing. The complexity is reduced during processing as number of possible combinations between the one or more predetermined parameters are limited to only those combinations that are represented by the selected one or more avatars. The one or more avatars also facilitate the one or more users to perceive results before optimization of the one or more resources.

In an exemplary embodiment pertaining to retail shelf space optimization, the one or more users enter the reference data such as, but not limited to, product dimensions, shelf dimensions, fixture dimensions, expected product's profit margins, expected sales, pricing, rank of the product, product images and product groupings based on brand, subcategory etc. via the reference data receiver 112. In an embodiment of the present invention, the one or more users select the one or more avatars related to a preferred configuration of products on a shelf or create an avatar of a preferred configuration using the avatar editor (not shown). The configurations of products on a shelf refers to, but not limited to, alignment, rotations, vertical and horizontal stacking of products on the shelves. The configurations of products facilitate promotional or complementary merchandising to trigger impulse buying by customers of the retail store based on visual appeal and presentation.

The constraints editor 114 facilitates the one or more users to create a library of partially compiled explicit constraints related to the one or more predetermined parameters. The library of the partially compiled explicit constraints is a collection of resources including pre-written codes and subroutines that are stored in an explicit constraints repository 138. The partially compiled explicit constraints are fully generated by a constraints generator 124 explained in later sections of the specification. In an embodiment of the present invention, creating a library of partially compiled explicit constraints facilitates the user to provide the one or more rules efficiently and eliminate the requirement of entering the one or more rules every time user accesses the system 100 of the invention for optimization of the one or more resources. The partially compiled explicit constraints are stored in the explicit constraints repository 138 in the form of one or more constraints lists. In an embodiment of the present invention, the one or more rules entered by the one or more users via the parameters and rules receiver 110 are implemented internally by the constraints editor 114 to generate partially compiled explicit constraints, associated database entries and tags. In an embodiment of the present invention, the constraints editor 114 facilitates creation of explicit constraints instances using the data entered by the one or more users via the constraints editor 114 or via the parameters and rules receiver 110. In various embodiments of the present invention, the one or more users can create, edit and add the one or more explicit constraint instances to the one or more constraints lists stored in the explicit constraints repository 138 using the constraints editor 114. In an embodiment of the present invention, an explicit constraint generator (not shown) communicates with the constraints editor 114 to access the one or more partially compiled explicit constraints pertaining to the constraints list selected by the one or more users via the constraints editor 114. In various embodiments of the present invention, the constraint editor 114 generates intermediate definition and declaration files of the one or more explicit constraints instances. The generated intermediate definition and declaration files are stored in the explicit constraints repository 138 and/or in an appropriate database.

In an exemplary embodiment pertaining to retail shelf space optimization, the one or more users select a particular constraints list to implement the one or more rules that are applicable based on the user preferences such as, rules related to product placement during festive season, rules related to product placement based on the gender and age of the target customers, rules related to placement of products based on the location of the store etc. The one or more constraints lists comprise a set of the one or more partially compiled explicit constraints to implement the one or more rules that are applicable based on the user preferences.

The central optimizer 104 facilitates optimization of the one or more resources by providing optimal values of the one or more predetermined parameters. The central optimizer 104 comprises a reference data encoding generator 116, a model transformation engine 118, an s-cell and s-grid generator 120, an objective function generator 122, a constraints generator 124, the avatars generator 126, an output generator 128, a model generator 130, a model parallelizer 132, a model executor 134, an optimization controller 136, the explicit constraints repository 138 and the optimization repository 140.

The reference data encoding generator 116 creates data structures that encode the reference data. The data structures encoding the reference data and associated data/files facilitate generation of one or more models. In various embodiments of the present invention, the reference data encoding generator 116 encodes the reference data entered by the one or more users via the reference data receiver 112 to make it consistent with the one or more models and optimization algorithms and to facilitate processing by an optimization engine (not shown). In an embodiment of the present invention, the reference data is stored in memory, spreadsheets, and/or in an appropriate database. In an embodiment of the present invention, the model generator 130 facilitates the reference data encoding generator 116 to create data structures and associated data/files which are necessary for generation of the one or more models. In another embodiment of the present invention, the reference data encoding generator 116 facilitates generation of the one or more avatars of the one or more predetermined parameters.

In an exemplary embodiment pertaining to retail shelf space optimization, the reference data encoding generator 116 facilitates encoding the reference data such as, but not limited to, dimensions of the one or more products, dimensions of the one or more shelves, dimensions of the one or more fixtures and dimensions of the one or more product sections, pricing, expected product's profit margins, expected sales, rank of the product, product images, product groupings based on brand and subcategory, the one or more avatars related data in appropriate data structures to facilitate computations related to optimization and providing optimal values of products on each of the one or more shelves, fixtures and product sections using the encoded reference data.

The model transformation engine 118 facilitates generation of one or more s-cells and one or more s-grids using the s-cell and s-grid generator 120 by encoding the one or more predetermined parameters related to optimization of the one or more resources, their dimensions and hierarchies into internal data structures. In an embodiment of the present invention, the model transforming module 118 communicates with domain specific handlers (not shown) and domain specific plug-in processors (not shown) to facilitate generation of the one or more s-cells and the one or more s-grids.

The s-cell and s-grid generator 120 generates the one or more s-cells and the one or more s-grids. Further, the s-cell and s-grid generator 120 is configured to encode the received data related to the one or more predetermined parameters into the one or more s-cells of the one or more s-grids to obtain encoded data. In an embodiment of the present invention, an s-cell is the smallest computational unit of an s-grid which encodes data related to the one or more predetermined parameters. Further, the s-grid is a multi-dimensional and a multi-hierarchical matrix encapsulating the domain structural classification of the one or more predetermined parameters using the one or more s-cells. The s-cell comprises multiple axes to compute various parameters having multiple dimensions and multiple hierarchies that are considered to facilitate optimization of the one or more resources. In various embodiments of the present invention, the one or more s-cells are mutable and transformable. In various embodiments of the present invention, the one or more s-grids are represented as, but not limited to, spreadsheets, database tables, memory structures, etc. Further, the one or more s-grids encode the structure of multiple dimensions and hierarchies related to the one or more predetermined parameters to facilitate computations related to optimization. In an embodiment of the present invention, the model generator 130 facilitates the s-cell and s-grid generator 120 to generate and refine/modify the one or more s-cells of the one or more s-grids based on the selected domain and the one or more resources to be optimized.

In an exemplary embodiment pertaining to retail shelf space optimization, the s-cell encodes products on one axis of the s-cell representing merchandising dimension and fixture, shelf, and location of the product on the other axis of the s-cell representing space dimension. In an embodiment of the present invention, encoding of the product is binary encoding. In an embodiment of the present invention, the one or more predetermined parameters such as products has at least one dimension such as, space dimension, merchandise dimension and time dimension. For example, a particular product belonging to a particular category of products in a shelf of a particular store at a particular time interval is represented using one or more predefined axes. Further, each dimension has at least one hierarchy. In an embodiment of the present invention, space dimension has hierarchies such as, but not limited to, country, region, city, store cluster, store, bay, fixture and units. In an embodiment of the present invention, time dimension has hierarchies such as, but not limited to, year, month, week and day. In an embodiment of the present invention, merchandise dimension has hierarchies such as, but not limited to, department of the store, category of products, subcategory of products, group/class of products, and style line/Stock Keeping Unit (SKU) of products.

The objective function generator 122 is configured to generate the one or more objective functions using the received data and the encoded data. In an embodiment of the present invention, the objective function generator 122 facilitates generating the one or more objective functions using the received data including, but not limited to, the data related to the one or more predetermined parameters and the objective function guidance. The one or more objective functions are mathematical functions related to the one or more objectives that are to be achieved. Further, the objective functions are related to the one or more predetermined parameters and relationship between the one or more predetermined parameters. In an embodiment of the present invention, the generated one or more objective functions and associated data are stored in memory or as files in optimization repository 140 or an appropriate database. The model generator 130 generates the one or more models using the generated one or more objective functions. In various embodiments of the present invention, the objective function generator 122 communicates with specific handlers (not shown) related to the selected domain and the one or more resources to be optimized to facilitate generation of the one or more objective functions.

In an exemplary embodiment pertaining to retail shelf space optimization, one or more objective functions related to retail shelf space optimization are mathematical equations generated by the objective function generator 122 related to the one or more objectives to be achieved. The one or more objectives to be achieved include, but not limited to, maximizing space utilization, maximizing revenue and maximizing sales.

The constraints generator 124 is configured to generate one or more constraints using the received data and the encoded data. In an embodiment of the present invention, the constraints generator 124 facilitates generating the one or more constraints using the received data including, but not limited to, the data related to the one or more predetermined parameters, the reference data related to the one or more predetermined parameters and the one or more rules. Further, the one or more constraints comprise the one or more explicit constraints and the one or more implicit constraints. Furthermore, the one or more implicit constraints and the one or more explicit constraints are declaration and definition files comprising various relationships, equations and variables that are incorporated in the one or more models for computations related to optimization of the one or more resources. In various embodiments of the present invention, one or more constraints include one or more relaxations, approximations and assumptions to facilitate optimization of the one or more resources. In an embodiment of the present invention, the constraints generator 124 communicates with one or more specific handlers (not shown) to generate the one or more implicit constraints and the one or more explicit constraints based on the selected domain and the one or more resources to be optimized. The generated one or more implicit constraints and the one or more explicit constraints are stored in memory and/or as files in the optimization repository 140.

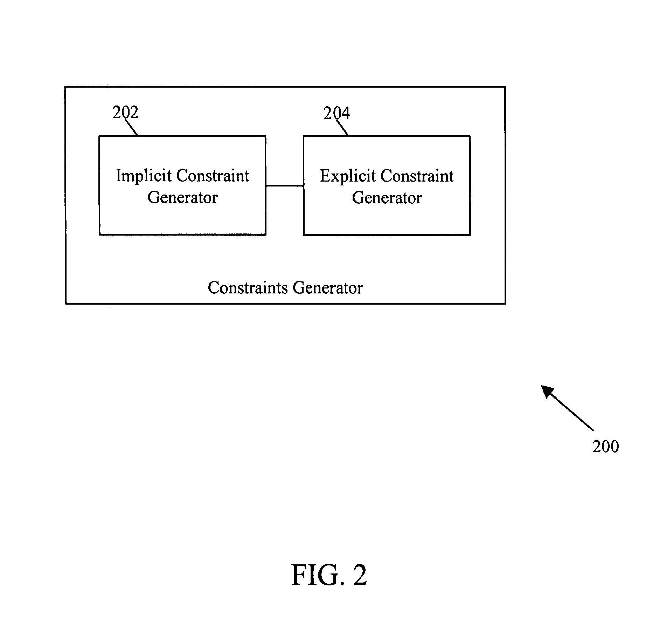

Referring now to FIG. 2 which illustrates a detailed block diagram of a constraints generator in accordance with an embodiment of the present invention. The constraints generator 124 (FIG. 1) comprises an implicit constraint generator 202 and an explicit constraint generator 204.

The implicit constraint generator 202 facilitates generation of the one or more implicit constraints that are required by the model generator 130 to generate the one or more models. The one or more implicit constraints are structural limitations that are enforced by the system 100 (FIG. 1) and generated by the implicit constraint generator 202 using the data related to the one or more predetermined parameters, the reference data and the data encoded in the one or more s-cells of the one or more s-grids. In an embodiment of the present invention, the implicit constraint generator 202 facilitates generation of the one or more implicit constraints pertaining to the data related to the one or more avatars entered via the reference data receiver 112 (FIG. 1). In an embodiment of the present invention, the one or more implicit constraints related to the one or more avatars selected or created by the one or more users facilitate implementing additional limitations. The additional limitations restrict the number of combinations considered for optimization to only those combinations that are related to the one or more avatars selected or created by the user which thereby facilitate complexity reduction during processing.

In an exemplary embodiment pertaining to retail shelf space optimization, the one or more implicit constraints generated include, but not limited to, declaration and definition files containing equations that represent structural limitations such as, but not limited to, particular product should not exceed the height, width and depth of the shelf, etc. In an embodiment of the present invention, the one or more implicit constraints generated by the implicit constraint generator 202 based on the avatars related data provided by the one or more users include, but not limited to, declaration and definition files. The generated declaration and definition files contain equations that represent the limitations imposed on the number of possible combinations of the various configurations of the one or more products to be considered during optimization to only those combinations that are related to the product configurations provided by the one or more selected avatars.

The explicit constraint generator 204 facilitates generation of the one or more explicit constraints that are required by the model generator 130 (FIG. 1) to generate the one or more models. The one or more explicit constraints are generated by the explicit constraint generator using the data related to the one or more predetermined parameters and the one or more rules, the reference data and the data encoded in the one or more s-cells of the one or more s-girds. In an exemplary embodiment of the present invention, the one or more explicit constraints are declaration and definition files comprising equations representing various limitations imposed by the one or more rules entered by the one or more users via the parameters and rules receiver 110 (FIG. 1) and the selected constraints list provided by the constraints editor 114 (FIG. 1). In an embodiment of the present invention, the explicit constraint generator 204 generates the one or more explicit constraints based on the appropriate constraints list selected by the one or more users. Further, selecting the appropriate constraints list facilitates invoking the one or more partially compiled explicit constraints stored in the explicit constraints repository 138 (FIG. 1) that are fully generated by the explicit constraint generator 204.

In an exemplary embodiment pertaining to retail shelf space optimization, the one or more explicit constraints include, but not limited to, declaration and definition files containing equations that represent limitations imposed by the one or more rules and selected constraints list provided by the one or more users such as, but not limited to, maximum number of products on a shelf, minimum number of top selling brands on a particular shelf etc.

Referring back to FIG. 1, the avatars generator 126 facilitates generation of the one or more avatars of the one or more predetermined parameters using data related to, but not limited to, the one or more predetermined parameters, the reference data, the one or more rules, the data encoded in the one or more s-cells of the one or more s-grids, the generated one or more objective functions and the generated one or more constraints. In an embodiment of the present invention, the avatars generator 126 facilitates generation of the two dimensional and three dimensional visual representations of the avatars of the one or more predetermined parameters before optimization. In an embodiment of the present invention, the avatars generator 126 facilitates generation of the two dimensional and three dimensional visual representations of the one or more avatars of the one or more predetermined parameters after optimization to be rendered on the display device. In an embodiment of the present invention, the one or more avatars are created dynamically by the avatars generator 126. In an embodiment of the present invention, the data related to the selected one or more avatars is stored in memory or as files in the optimization repository 140 to facilitate generation of the one or more models. Further, the reference data encoding generator 116 facilitates encoding data related to the one or more avatars selected by the one or more users via the reference data receiver 112. The encoded data related to the one or more avatars are required to generate the one or more models by the model generator 130. In an embodiment of the present invention, the avatars related data facilitates faster processing as the optimization controller 136 considers only those combinations of the one or more predetermined parameters that are consistent with the one or more avatars selected by the one or more users.

In an exemplary embodiment pertaining to retail shelf space optimization, the one or more avatars are generated for products, shelves and fixtures. In an embodiment of the present invention, the avatars generator 126 facilitates generation of the two dimensional and three dimensional visual representation of the one or more products, shelves and fixtures representing product placement, product stacking, product rotations, and product facings.

The output generator 128 is configured to generate one or more output indicators using the received data and the encoded data. In an embodiment of the present invention, the output generator facilitates generating the one or more output indicators using received data including, but not limited to, data related to the one or more predetermined parameters and the one or more rules. Further, the one or more output indicators are required by the one or more models to generate optimization results. The one or more output indicators generated by the output generator 128 include, but not limited to, output declaration and output definition files. Further, the one or more output indicators facilitate the model executor 134 to generate appropriate optimization results in accordance with the selected domain and the one or more resources to be optimized. The output generator 128 communicates with specific handlers (not shown) to facilitate generation of the one or more output indicators related to the selected domain and one or more resources to be optimized. In various embodiments of the present invention, the one or more models are generated by the model generator 130 using the one or more output indicators generated by the output generator 128. In an embodiment of the present invention, the output declaration and the output definition files facilitate the optimization controller 136 and the model executor 134 to generate the optimization results in an appropriate form such as, but not limited to, s-grids and s-cells encoded in spreadsheet, objective function values in a different spreadsheet, etc.

In an exemplary embodiment pertaining to retail shelf space optimization, the one or more output indicators contains instructions for the model executor 134 to generate the optimization results in an appropriate form such as, objective function values in a particular spreadsheet, product allocation and product assortment schemes in a different spreadsheet, etc.

The model generator 130 is configured to generate the one or more models corresponding to the one or more resources. Further, the model generator 130 generates the one or more models by aggregating the received data, the encoded data, the generated one or more objective functions, the generated one or more constraints and the generated one or more output indicators. In an embodiment of the present invention, the received data aggregated by the model generator includes, but not limited to, the data related to the one or more predetermined parameters. In an embodiment of the present invention, the model generator 130 generates one or more logical and one or more physical models. The one or more logical models represent the structure of information related to the selected domain and are stored in the optimization repository 140. Further, the one or more logical models are independent of the optimization engine (not shown). The one or more logical models are transformed into one or more physical models to implement the optimization results. In an embodiment of the present invention, the one or more physical models are files/data that are stored in the optimization repository 140. The one or more physical models are specific to the optimization engine (not shown) and related to the selected domain. In an embodiment of the present invention, the model generator 130 comprises a specific handler called a model factory (not shown) that facilitates creating the one or more models.

In an embodiment of the present invention, one or more model templates pertaining to the selected domain and resources to be optimized exist in the optimization repository 140. Further, the model factory (not shown) facilitates creating one or more model instances by invoking the one or more model templates stored in the optimization repository 140 based on the one or more predetermined parameters and the selected domain. Furthermore, the one or more model templates contain tags and/or workflow instructions which facilitate creation of the one or more models by aggregating data related to the one or more predetermined parameters, the data encoded in the one or more s-cells of the one or more s-grids, the generated one or more objective functions, the generated one or more constraints and the generated one or more output indicators. In an embodiment of the present invention, a model template factory (not shown) facilitates creation of the one or more model templates. In an embodiment of the present invention, the model generator 130 facilitates performing tasks such as, but not limited to, generating internal data structures, generating job trees for various jobs that are to be executed, generating job trees related to parallelization schemes, model transformation, preparing for model execution and pre-optimization compilation.

In an embodiment of the present invention, the model generator 130 communicates with the objective function generator 122, the constraints generator 124, and the output generator 128 to facilitate generation of the one or more objective functions, the one or more explicit constraints, the one or more implicit constraints and the one or more output indicators that are required for generation of the one or more models. In an embodiment of the present invention, the constraints generator 124 communicates with the explicit constraint generator (not shown) which further communicates with the constraints editor 114 to generate the one or more explicit constraints.

In an exemplary embodiment pertaining to retail shelf space optimization, the model generator 130 communicates with the model factory (not shown) to invoke the one or more model templates related to retail shelf space optimization stored in the optimization repository 140. In another exemplary embodiment of the present invention, the model factory (not shown) communicates with the model template factory (not shown) to create one or more model templates. Further, the model template related for retail shelf space optimization contains tags and/or workflow instructions to facilitate aggregating the data related to the one or more products, shelves, fixtures and product sections, the data encoded in the one or more s-cells of the one or more s-grids pertaining to the one or more products, shelves, fixtures and product sections, the reference data related to the one or more products, shelves, fixtures and product sections, the generated one or more objective functions, the generated one or more constraints and the generated one or more output indicators to generate the one or more models for retail shelf space optimization.

The model parallelizer 132 is configured to obtain one or more sub-models from the generated one or more models by splitting the one or more generated models. The model parallelizer 132 facilitates splitting the one or more models using a parallelization scheme to create the one or more sub-models, their associated data/files and associated jobs. Further, the parallelization scheme comprises an explicit parallelization scheme and an implicit parallelization scheme. In an embodiment of the present invention, each one of the one or more sub-models and associated jobs are independent of the one or more models and the other one or more sub-models. In an embodiment of the present invention, the parallelization scheme comprises an explicit parallelization scheme and an implicit parallelization scheme. In an embodiment of the present invention, the parallelization scheme includes divide and conquer algorithm. In an embodiment of the present invention, the explicit parallelization scheme facilitates creating the one or more sub-models and associated one or more jobs by splitting the one or more models based on the one or more predetermined parameters. Further, the one or more jobs associated with the one or more sub-models are divided into one or more sub-jobs using implicit parallelization scheme.

In an embodiment of the present invention, the model generator 130 communicates with the model parallelizer 132 to create the one or more sub-models. In an embodiment of the present invention, the model parallelizer 132 communicates with one or more handlers (not shown) to facilitate dividing the one or more models into one or more sub-models and their associated one or more jobs. In an embodiment of the present invention, the model executor 134 communicates with the model parallelizer 132 to facilitate parallel processing of the generated sub-models and their associated jobs and sub-jobs using a distributed computing framework. In an embodiment of the present invention, the model executor 134 communicates with the model parallelizer 132 to create job trees such as, but not limited to, one job per model and one job per sub-model.

In an exemplary embodiment pertaining to retail shelf space optimization, the model parallelizer 132 facilitates splitting the one or more models generated for retail shelf space optimization by using the explicit parallelization scheme which includes the divide and conquer algorithm. Further, the divide and conquer algorithm facilitates dividing the one or more models into the one or more sub-models by identifying independent jobs at fixture level. Further, the model parallelizer 132 facilitates dividing the one or more jobs associated with the one or more fixtures into sub-jobs associated with the shelves of the one or more fixtures using implicit parallelization scheme employing an implicit divide and conquer algorithm.

The model executor 134 facilitates scheduling the one or more jobs and the one or more sub-jobs related to processing of the one or more sub-models. The model executor 134 further compiles the one or more sub-models before processing and sending the compiled one or more sub-models to the optimization engine (not shown) via a parallelization engine (not shown) for processing. Further, compiling the one or more sub-models before processing facilitates avoiding run time compilations of the one or more sub-models and associated files by the optimization engine (not shown). In various embodiments of the present invention, the one or more jobs and the one or more sub-jobs related to the one or more sub-models are instances of computer programs that are executed. Also, the model executor 134 further facilitates aggregating the one or more optimization results and performing transformations on the one or more s-grids generated after processing of the one or more sub-models to generate appropriate results. In addition, the model executor 134 facilitates compiling of processed one or more sub-models and generated optimization results. The model executor 134 further performs error correction.

In an embodiment of the present invention, the model executor 134 facilitates providing optimization engine (not shown) specific configuration parameters and monitors the parallelization engine (not shown) and the optimization engine (not shown). In an embodiment of the present invention, the model executor 134 facilitates creation of parallelization schemes by the model parallelizer 132. Further, the model executor 134 communicates with the parallelization engine (not shown) to facilitate processing using a distributed computing framework. In another embodiment of the present invention, the model executor 134 facilitates creating the one or more sub-models and associated jobs by the model parallelizer 132 by splitting the one or more models based on fixtures in the store, shelves in the stores, category of products and sections of the store.

The optimization controller 136 is configured to generate one or more optimization results associated with the one or more sub-models. Further, the optimization controller 136 generates the one or more optimization results by processing the one or more sub-models using a distributed computing framework. In an embodiment of the present invention, the distributed computing framework is, without any limitation, a cloud computing framework and a grid computing framework. The optimization controller 136 functions in synchronization with the model generator 130, the model parallelizer 132 and the model executor 134 to facilitate processing of the one or more sub-models and executing the one or more jobs and the one or more sub-jobs associated with the one or more sub-models. The one or more sub-models generated by the model parallelizer 132 are processed by the optimization controller 136 and compiled by the model executor 134 to generate the one or more optimization results and appropriate output to be displayed to the user. The optimization controller 136 comprises the optimization engine (not shown) which facilitates processing of the one or more sub-models using a distributed computing framework to generate the one or more optimization results. Further, the optimization controller 136 facilitates aggregating the generated one or more optimization results to generate an aggregated optimized result using an aggregator (not shown). In addition, the optimization controller 136 facilitates transforming the aggregated optimized result into one or more predetermined formats for rendering on the one or more display devices using a post aggregation transformation engine. In an embodiment of the present invention, the avatars generator 126 facilitates generation of the two dimensional and three dimensional visual representation of the one or more optimization results generated by optimization controller 136.

In an exemplary embodiment pertaining to retail shelf space optimization, the one or more sub-models associated with the one or more fixtures are processed by the optimization controller 136 using the distributed computing framework to generate the one or more optimization results. Further, each of the one or more optimization results associated with the one or more fixtures include, but not limited to, allocation plan of products, assortment plans of the products and placement plan of the products on one or more fixtures. Furthermore, the generated one or more optimization results are in the form of database tables or memory structures comprising, but not limited to, allocation plan of the products for a particular fixture and its shelves, assortment plan of products for a particular fixture and its shelves etc. Also, the generated one or more optimization results associated with the one or more fixtures are aggregated by the aggregator (not shown) to generate the aggregated optimized result including, but not limited to, a comprehensive allocation plan for all the products, a comprehensive assortment plan for all the products and a comprehensive placement plan of products for all the fixtures and their shelves and products sections of the retail store. In addition, the aggregated optimized result is transformed into one or more predetermined formats such as, but not limited to, planograms, reports, graphs and layouts showing allocation of products, assortment of products and placement of products on various fixtures and shelves of the retail store which is displayed on the one or more display devices.

The explicit constraints repository 138 is a library of partially compiled explicit constraints which is a collection of resources including pre-written codes and subroutines related to explicit constraints created by the user using the constraints editor 114. The partially compiled explicit constraints are stored as the one or more constraints lists in the explicit constraints repository 138. The one or more constraints lists comprise a set of partially compiled explicit constraints related to a particular user preference. In an embodiment of the present invention, the one or more rules entered by the one or more users via the parameters and rules receiver 110 are implemented internally by the constraints editor 114 to generate one or more partially compiled explicit constraints and associated database entries and tags. In an embodiment of the present invention, the one or more users can create, edit and add the one or more explicit constraint instances to the one or more constraints lists stored in the explicit constraints repository 138 using the constraints editor 114. In an embodiment of the present invention, the constraint editor 114 generates intermediate definition and declaration files of the one or more explicit constraints instances which are stored in the explicit constraints repository 138 and/or in an appropriate database.

The optimization repository 140 is a repository to store data related to optimization of the one or more resources. The data related to optimization of one or more resources include data related to, but not limited to, the one or more predetermined parameters, the one or more rules, optimization schemes, parallelization schemes, job trees representing the one or more models, schemes and policies indicating number of threads possible for parallelization, memory available to allow maximum and efficient job parallelization, optimization and optimization engine specific policies, resource specific policies, one or more models, domain and problem specific model templates, model templates, algorithms related to optimization and algorithms related to parallelization. In an embodiment of the present invention, parallelization and optimization algorithms include, but not limited to, multi-dimensional, multi-hierarchical, and multi objective binary knapsack algorithm, parallelization algorithms, divide and conquer algorithm, model execution algorithm, and resource allocation algorithm that are stored in the optimization repository 140. In an embodiment of the present invention, the multi-dimensional, multi-hierarchical and multi objective binary knapsack algorithm facilitates processing of the one or more sub-models and performs optimization based on the domain and one or more resources to be optimized. Further, the multi-dimensional, multi-hierarchical and multi objective binary knapsack algorithm applies various relaxations, assumptions, and approximations to the one or more models to facilitate optimizing the one or more resources.

The output interface 106 is a front end interface that provides options to the one or more users to access data and reports related to the aggregated optimization result. In an embodiment of the present invention, the output interface is an interactive interface such as, but not limited to, a GUI and a character user interface. The output interface 106 comprises a report generator 142, an output selector 144, and a display 146.

The report generator 142 facilitates generation of one or more reports. Further, the report generator 142 facilitates the one or more users to access the one or more generated reports. The one or more generated reports include, but not limited to, input data reports, optimization results reports, objective function related reports, optimization history related reports, output data reports and consolidated reports.

In an exemplary embodiment pertaining to retail shelf space optimization, the report generator 142 generates the one or more reports including, but not limited to, input data report which provides data related to shelves, products, fixtures and product sections entered by the one or more users, rules report comprising various rules entered by the one or more users, optimization output report, objective functions report providing values of expected maximum revenue, maximum sales, maximum profit, maximum utilized space, etc.

The output selector 144 facilitates the one or more users to select the format in which the optimization output is to be displayed. In various embodiments of the present invention, the optimization output is represented in various formats including, but not limited to, spreadsheets, reports, flowcharts, planograms, graphs, diagrams, pictures, and assortment plans. The display 146 facilitates displaying the output in an appropriate format as selected by the user.

In an exemplary embodiment pertaining to retail shelf space optimization, the one or more users select the appropriate output format via the output selector 144 to facilitate displaying the aggregated optimized result in the selected output format such as, but not limited to, planograms showing product allocation scheme, assortment plans, diagrams showing products allocation scheme and products assortment plan, and bar graph showing product allocation scheme, product placement scheme and product assortment plans on the one or more fixtures and shelves.

The present invention may be utilized to optimize one or more resources in many different domains including, but not limited to, retail, cargo, warehouse, office administration and banking.

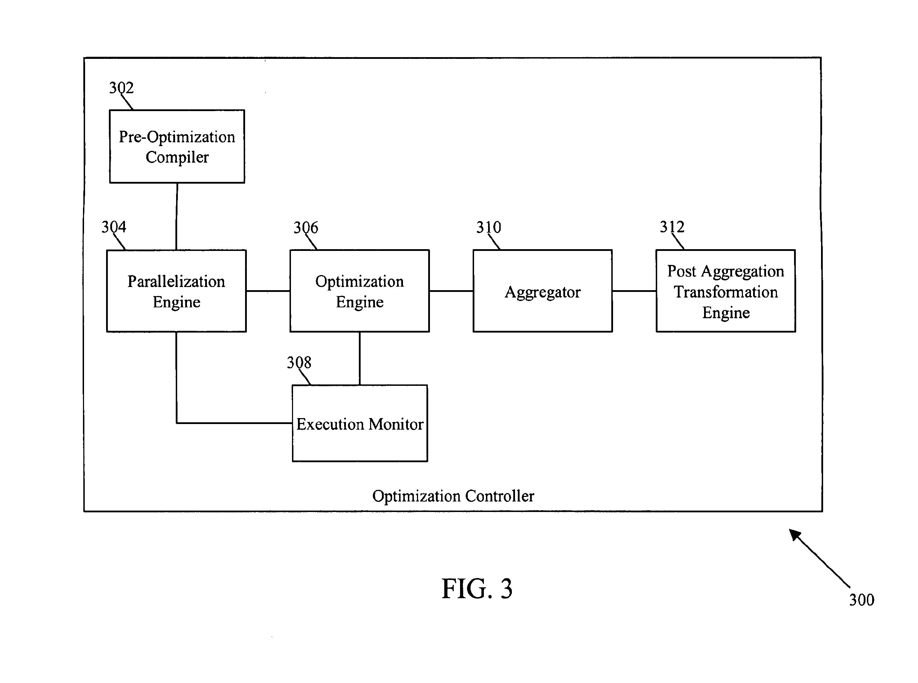

FIG. 3 illustrates a detailed block diagram of an optimization controller in accordance with an embodiment of the present invention. The optimization controller 300 comprises a pre-optimization compiler 302, a parallelization engine 304, an optimization engine 306, an execution monitor 308, an aggregator 310 and a post aggregation transformation engine 312.

The pre-optimization compiler 302 facilitates compiling and validating the one or more sub-models generated by the model parallelizer 132 (FIG. 1) and facilitates error detection. Further, the validated and compiled one or more sub-models and their associated data/files are sent to the parallelization engine 304 and the optimization engine 306 for processing. In an embodiment of the present invention, compiling the sub-models and their dependent files by the pre-optimization compiler 302 facilitates faster performance as the optimization engine 306 need not perform run-time compilations during execution of the one or more jobs and the one or more sub-jobs. Further, the pre-optimization compiler 302 prepares the model executor 134 (FIG. 1) to facilitate processing the one or more sub-models by optimization engine 306. In an alternate embodiment of the present invention, the one or more sub-models are compiled prior to processing by the model generator 130 (FIG. 1) or the model executor 134 (FIG. 1).

In an exemplary embodiment pertaining to retail shelf space optimization, the pre-optimization compiler 302 facilitates compiling and validating the one or more sub-models and the associated one or more jobs and the one or more sub-jobs. Further, the one or more sub-models are associated with the one or more fixtures and sub-jobs are associated with the one or more shelves of the one or more fixtures based on the parallelization scheme.

The parallelization engine 304 is a distributed computing framework which aggregates multiple autonomous computers that communicate using a computer network. Further, the parallelization engine 304 facilitates creating one or more execution threads and assigning the one or more jobs and the one or more sub-jobs associated with the one or more sub-models to the one or more created execution threads for parallel execution. In various embodiments of the present invention, an execution thread is the smallest unit of processing that can be scheduled by the parallelization engine 304 and executed by the optimization engine 306 independently and simultaneously with the other one or more execution threads. In an embodiment of the present invention, the parallelization engine 304 monitors the execution of the one or more jobs and the one or more sub-jobs by the optimization engine 306 on each of the one or more execution threads of the distributed computing framework. Further, the parallelization engine 304 facilitates reporting the execution status of each of the one or more jobs and the one or more sub-jobs to the execution monitor 308. Furthermore, the parallelization engine 304 manages, allocates, and schedules the execution plan, resources, and the one or more jobs and the associated one or more sub-jobs to execution threads. In various embodiments of the present invention, the parallelization engine 304 communicates with the optimization engine 306 based on the one or more execution threads. The parallelization engine 304 includes, but not limited to, an external or internal grid computing framework, an internal or external cloud computing framework, a parallel computing framework and a concurrent computing framework. For example, the parallelization engine 304 may be a grid computing framework such as 'Alchemi'.

In an exemplary embodiment pertaining to retail shelf space optimization, the parallelization engine 304 facilitates creating one or more execution threads and assigning the one or more jobs and the one or more sub-jobs associated with the one or more fixtures and the one or more shelves to the created one or more execution threads. Further, the parallelization engine 304 aggregates multiple computers and facilitates parallel execution of the one or more execution threads to execute the one or more jobs and the one or more sub-jobs to optimize the retail shelf space.

The optimization engine 306 facilitates processing of the compiled and validated one or more sub-models by executing the one or more jobs and the one or more sub-jobs associated with the one or more sub-models to generate the one or more optimization results. Further, the optimization engine 306 facilitates complex and large-scale processing. The one or more jobs and the one or more sub-jobs are executed independently on the one or more execution threads created by the parallelization engine 304. In various embodiments of the present invention, the optimization engine 306 facilitates processing of the one or more sub-models involving the one or more predetermined parameters having multiple dimensions and multiple hierarchies. For example, the optimization engine 306 may be a General Algebraic Modeling System (GAMS), IBM® ILOG® CPLEX® optimization studio and Coin-or Branch and Cut (CBC) solver. GAMS is a high-level modeling system for processing the one or more sub-models. In an embodiment of the present invention, the one or more optimization results associated with the one or more sub-models are in the form of database tables, memory structures and spreadsheets containing, but not limited to, resultant s-grids and s-cells, one or more reports, objective function value and optimal values of the one or more predetermined parameters and association with the other one or more predetermined parameters.

In an embodiment of the present invention, the avatars generator 126 (FIG. 1) is configured to generate the two dimensional and the three dimensional visual representation of the one or more optimization results generated by the optimization engine 306. Further, the avatars generator 126 (FIG. 1) facilitates generating the two dimensional and the three dimensional visual representation using the received data, the encoded data, the generated one or more objective functions and the generated one or more constraints. In an embodiment of the present invention, the avatars generator 126 (FIG. 1) generates the two dimensional and the three dimensional visual representation using the received data including, but not limited to, data related to the one or more predetermined parameters, the reference data related to the one or more parameters and the one or more rules.

In an exemplary embodiment pertaining to retail shelf space optimization, the optimization engine 306 facilitates processing of the compiled and validated one or more sub-models by executing the one or more jobs and the one or more sub-jobs associated with one or more fixtures and its shelves to generate one or more products allocation schemes for the associated fixture and its shelves. In an embodiment of the present invention, the one or more optimization results are in the form of database tables, memory structures and spreadsheets containing, but no limited to, allocation plans of products for the associated fixture and its shelves, allocation plan of products for associated fixture and its shelves, spreadsheet containing values of maximum utilized fixture space, product allocation reports for the associated fixture and its shelves.

The execution monitor 308 monitors the activity of the parallelization engine 304 and the optimization engine 306. Further, the execution monitor 308 monitors the one or more optimization results generated by the optimization engine 306 for each of the one or more sub-models and notifies the model executor 134 (FIG. 1) of the generated one or more optimization results. Furthermore, the execution monitor 308 further facilitates synchronization between the parallelization engine 304 and the optimization engine 306. In addition, the model executor 134 (FIG. 1) compiles and validates the generated one or more optimization results associated with each of the processed one or more sub-models.

The aggregator 310 is configured to aggregate the one or more optimization results associated with the one or more sub-models to generate an aggregated optimized result. Further, the aggregated optimized result is used for optimization of the one or more resources. Furthermore, the aggregated optimized result provides a comprehensive optimization solution by consolidating the one or more optimization results pertaining to each of the processed one or more sub-models. The aggregated optimized result is in the form of database tables, memory structures and spreadsheets containing, but not limited to, consolidated reports, consolidated objective function values related to all the processed sub-models, optimal values for all the one or more predetermined parameters and their associations with the other one or more predetermined parameters and comprehensive allocation plan, placement plan, assortment plan and distribution plan of the one or more predetermined parameters.

In an exemplary embodiment pertaining to retail shelf space optimization, the aggregator 310 facilitates aggregating the generated product allocation schemes for the associated one or more fixtures and its shelves to generate a comprehensive product allocation scheme comprising all the fixtures, shelves and product sections in a particular retail store. In an embodiment of the present invention, the aggregated optimized result is in the form of database tables, memory structures and spreadsheets containing, but no limited to, comprehensive allocation plan of products, assortment plan of products, placement plan of products and distribution plan of products for all the fixtures, shelves and product sections in the retail store and spreadsheet containing values of maximum utilized space for all the fixtures, shelves and product sections in the retail store.

The post aggregation transformation engine 312 is configured to transform the aggregated optimized result into one or more predetermined formats for rendering the aggregated optimized result on one or more display devices. Further, the one or more predetermined formats comprise at least one of: planograms, reports, graphs and layouts. The post aggregation transformation engine 312 facilitates transforming the aggregated optimized result into one or more predetermined formats selected by the user via the output selector 144 (FIG. 1) for rendering the aggregated optimized result on the one or more display devices. In an embodiment of the present invention, the post aggregation transformation engine 312 facilitates rendering the aggregated optimized result in one or more predetermined formats which user can view and comprehend.

In an exemplary embodiment pertaining to retail shelf space optimization, the post aggregation transformation engine 312 facilitates transforming the generated comprehensive allocation plan of products, assortment plan of products, placement plan of products and distribution plan of products for all the fixtures, shelves and product sections into the one or more predetermined formats such as, but not limited to, planograms, reports, graphs, layouts and spreadsheets that user can view and comprehend. In an embodiment of the present invention, the post aggregation transformation engine 312 facilitates rendering the comprehensive allocation plan for products as planograms on the one or more display devices. In another embodiment of the present invention, the user can view the values of the maximum utilized space in a spreadsheet and report format.

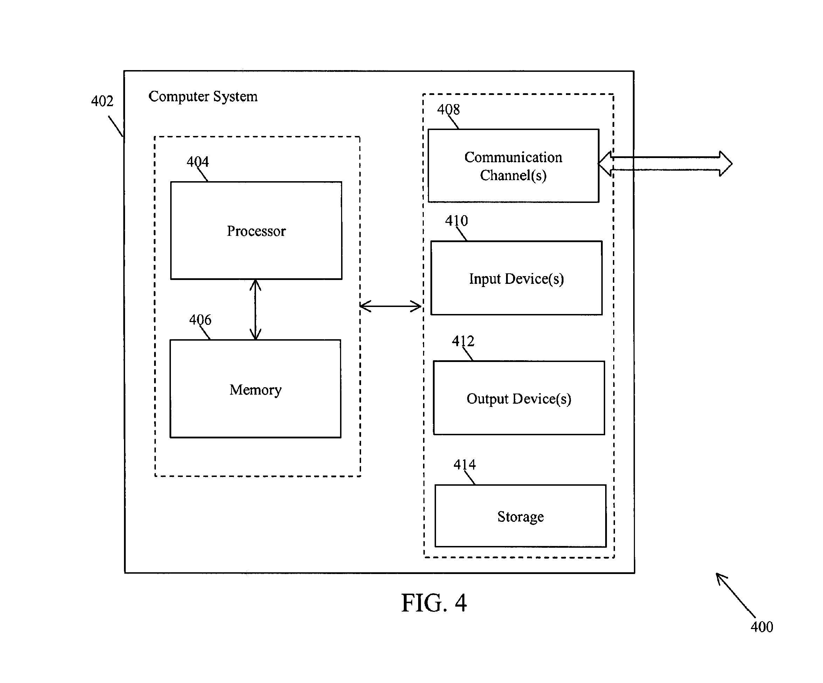

FIG. 4 illustrates an exemplary computer system for optimization of resources in accordance with an embodiment of the present invention.

The computer system 402 comprises a processor 404 and a memory 406. The processor 404 executes program instructions and may be a real processor. The processor 404 may also be a virtual processor. The computer system 402 is not intended to suggest any limitation as to scope of use or functionality of described embodiments. For example, the computer system 402 may include, but not limited to, a general-purpose computer, a programmed microprocessor, a micro-controller, a peripheral integrated circuit element, and other devices or arrangements of devices that are capable of implementing the steps that constitute the method of the present invention. In an embodiment of the present invention, the memory 406 may store software for implementing various embodiments of the present invention. The computer system 402 may have additional components. For example, the computer system 402 includes one or more communication channels 408, one or more input devices 410, one or more output devices 412, and storage 414. An interconnection mechanism (not shown) such as a bus, controller, or network, interconnects the components of the computer system 402. In various embodiments of the present invention, operating system software (not shown) provides an operating environment for various softwares executing in the computer system 402, and manages different functionalities of the components of the computer system 402.

The communication channel(s) 408 allow communication over a communication medium to various other computing entities. The communication medium provides information such as program instructions, or other data in a communication media. The communication media includes, but not limited to, wired or wireless methodologies implemented with an electrical, optical, RF, infrared, acoustic, microwave, bluetooth or other transmission media.

The input device(s) 410 may include, but not limited to, a keyboard, mouse, pen, joystick, trackball, a voice device, a scanning device, or any another device that is capable of providing input to the computer system 402. In an embodiment of the present invention, the input device(s) 410 may be a sound card or similar device that accepts audio input in analog or digital form. The output device(s) 412 may include, but not limited to, a user interface on CRT or LCD, printer, speaker, CD/DVD writer, or any other device that provides output from the computer system 402.

The storage 414 may include, but not limited to, magnetic disks, magnetic tapes, CD-ROMs, CD-RWs, DVDs, flash drives or any other medium which can be used to store information and can be accessed by the computer system 402. In various embodiments of the present invention, the storage 414 contains program instructions for implementing the described embodiments.

The present invention may suitably be embodied as a computer program product for use with the computer system 402. The method described herein is typically implemented as a computer program product, comprising a set of program instructions which is executed by the computer system 402 or any other similar device. The set of program instructions may be a series of computer readable codes stored on a tangible medium, such as a computer readable storage medium (storage 414), for example, diskette, CD-ROM, ROM, flash drives or hard disk, or transmittable to the computer system 402, via a modem or other interface device, over either a tangible medium, including but not limited to optical or analogue communications channel(s) 408. The implementation of the invention as a computer program product may be in an intangible form using wireless techniques, including but not limited to microwave, infrared, bluetooth or other transmission techniques. These instructions can be preloaded into a system or recorded on a storage medium such as a CD-ROM, or made available for downloading over a network such as the internet or a mobile telephone network. The series of computer readable instructions may embody all or part of the functionality previously described herein.

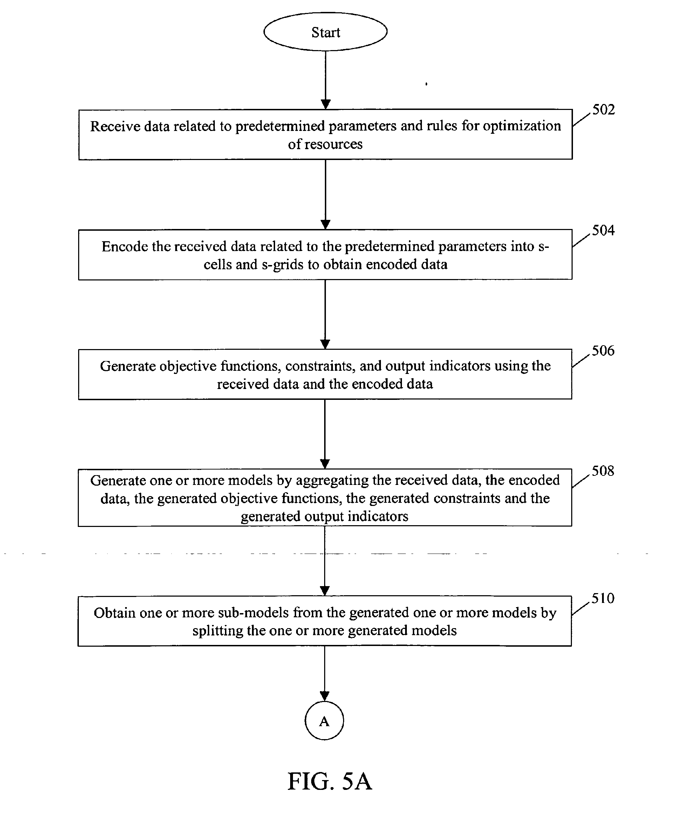

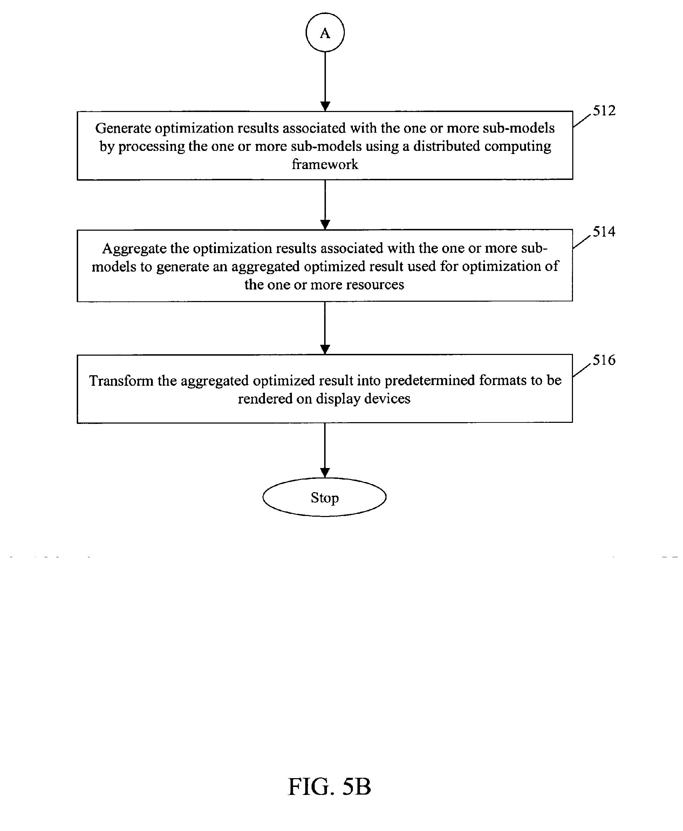

FIGS. 5A and 5B is a flowchart illustrating a method for optimization of resources in accordance with an embodiment of the present invention.

At step 502, data related to one or more predetermined parameters and one or more rules for optimization of one or more resources is received. In an embodiment of the present invention, the received data includes, but not limited to, data related to the one or more predetermined parameters, the one or more rules, an objective function guidance, reference data related to the one or more predetermined parameters and data related to one or more avatars of the one or more predetermined parameters. In an embodiment of the present invention, the one or more resources to be optimized include, but not limited to, retail resources, cargo resources, pecuniary resources, human resources, hardware resources, network resources, software resources and infrastructure resources.

In an exemplary embodiment of the present invention, one or more users selects retail domain via a domain selector. The one or more users further select one or more resources to be optimized related to retail domain. In embodiment of the present invention, the one or more users select an option to optimize the retail shelf space of a retail store. The one or more predetermined parameters such as, but not limited to, products, shelves, fixtures and product sections related to retail shelf space optimization are populated based on the one or more user's selection of retail domain and shelf space optimization. In various embodiments of the present invention, the one or more users include, but not limited to, retail store manager, store employee, merchandizing manager, product manufacturer, etc.

In an exemplary embodiment pertaining to retail shelf space optimization, data related to products, shelves, fixtures and product sections is received. In an embodiment of the present invention, data related to products, fixtures, shelves and product sections include data such as, but not limited to, number of products, number of shelves, number of fixtures, number of product sections, product types and categories, section types, product identification values etc. In an embodiment of the present invention, the one or more rules include, but not limited to, minimum and maximum number of facings of a particular product, maximum and minimum number of products on a particular shelf, associating a particular product to a particular shelf, top selling products for a particular shelf, minimum number of products from a particular brand, etc. In an embodiment of the present invention, the objective function guidance is received. Further, the objective function guidance is related to one or more objectives to be achieved such as, maximizing profit, maximizing revenue and maximizing sales.

In an exemplary embodiment pertaining to retail shelf space optimization, the reference data related to products, shelves, fixtures and product sections including, but not limited to, product dimensions, shelf dimensions, fixture dimensions, expected product's profit margins, expected sales, pricing, rank of the product, product images and product groupings based on brand, subcategory etc. is received. In an embodiment of the present invention, data related to one or more avatars is received. The one or more avatars are related to the configuration of one or more products on one or more shelves. Further, the configuration of the one or more products on the one or more shelves includes, but not limited to, alignment, rotations, vertical stacking and horizontal stacking of the one or more products to facilitate promotional or complementary merchandising to trigger impulse buying by customer of the retail store, visual appeal and presentation. In an embodiment of the present invention, data related to selected constraints list facilitates implementing applicable rules such as, but not limited to, rules related to product placement during festive season, rules related to product placement based on gender and age of target customers, rules related to placement of products based on location of the retail store as per user preference.

At step 504, the received data related to the one or more predetermined parameters is encoded into one or more s-cells of one or more s-grids to obtain encoded data. In an embodiment of the present invention, the received data encoded into the one or more s-cells of the one or more s-grids includes data related to the one or more predetermined parameters. In various embodiments of the present invention, encoding data related to each of the one or more predetermined parameters occurs on a predefined axis of the one or more s-cells of the one or more s-grids. In various embodiments of the present invention, the one or more s-grids and the one or more s-cells are represented as, but not limited to, spreadsheets, database tables, memory structures, etc. In an embodiment of the present invention, an s-cell and s-grid generator facilitates generation of the one or more s-cells and the one or more s-grids.

In an exemplary embodiment pertaining to retail shelf space optimization, the received data related to the one or more products, shelves, fixtures and product sections is encoded in the one or more s-cells of the one or more s-grids. In an embodiment of the present invention, the one or more s-cells encode products on one axis of the one or more s-cells representing merchandising dimension and fixture, shelf, and location of the product on the other axis of the one or more s-cells representing space dimension. In an embodiment of the present invention, the one or more predetermined parameters such as products has at least one associated dimension such as, but not limited to, space dimension, merchandise dimension and time dimension. For example, a particular product belonging to a particular category of products in a shelf of a particular store at a particular time interval is represented using one or more predefined axes. Further, the at least one dimension has an at least one associated hierarchy. In an embodiment of the present invention, space dimension has hierarchies such as, but not limited to, country, region, city, store cluster, store, section, bay, section, fixture and units. In an embodiment of the present invention, time dimension has hierarchies such as, but not limited to, year, month, week and day. In an embodiment of the present invention, merchandise dimension has hierarchies such as, but not limited to, department of the store, category of products, subcategory of products, group/class of products, and style line/SKU of products.

At step 506, one or more objective function, one or more constraints and one or more output indicators are generated using the received data and the encoded data. In various embodiments of the present invention, the one or more constraints include one or more implicit constraints and one or more explicit constraints.

In an exemplary embodiment pertaining to retail shelf space optimization, the one or more objective functions are generated using data related to the one or more products, shelves, fixtures and product sections, the objective function guidance related to one or more objectives such as maximum shelf space utilization and maximum sales, and the data related to one or more products, shelves, fixtures and product sections encoded in the one or more s-cells of the one or more s-grids. The one or more objective functions are mathematical functions related to the one or more objectives such as maximizing sales, maximizing space utilization etc.

In an exemplary embodiment pertaining to retail shelf space optimization, the one or more explicit constraints include, but not limited to, declaration and definition files containing equations that represent limitations imposed by the one or more rules and the constraints list such as, but not limited to, minimum and maximum number of facings of a particular product, maximum and minimum number of products on a particular shelf, associating a particular product to a particular shelf, selecting top selling products for a particular shelf etc. The one or more explicit constraints are generated using the data encoded in the one or more s-cells of the one or more s-grids, received data related to the one or more products, fixtures, shelves and products sections and the one or more rules. In an embodiment of the present invention, the one or more implicit constraints generated for retail shelf space optimization include, but not limited to, declaration and definition files containing equations that represent structural limitations such as particular product should not exceed the height, width and depth of the shelf, etc. In an embodiment of the present invention, the one or more implicit constraints generated using the received data related to the one or more avatars include, but not limited to, declaration and definition files containing equations that represent the limitations imposed on the configurations of the products.

In an exemplary embodiment pertaining to retail shelf space optimization, the one or more output indicators contains instructions for generation of optimization results in an appropriate form such as, the one or more objective function values in a particular spreadsheet, allocation plan of products and assortment plan of products in a different spreadsheet, etc. The one or more output indicators are generated using the data encoded in the one or more s-cells of the one or more s-grids, the received data related to the one or more products, fixtures, shelves and products sections and the one or more rules.

At step 508, one or more models corresponding to the one or more resources are generated by aggregating the received data, the encoded data, the generated one or more objective functions, the generated one or more constraints and the generated one or more output indicators.

In an exemplary embodiment pertaining to retail shelf space optimization, the model generator communicates with model factory to invoke one or more model templates for retail shelf space optimization. In another exemplary embodiment of the present invention, the model factory communicates with model template factory to create a model template related to retail shelf space optimization. Further, the one or more model templates related to retail shelf space optimization contains tags and/or workflow instructions to facilitate aggregating the received data related to the one or more products, shelves, fixtures and product sections, the data encoded in the one or more s-cells of the one or more s-grids pertaining to the one or more products, shelves, fixtures and product sections, the reference data related to the one or more products, shelves, fixtures and product sections, the generated one or more objective functions, the generated one or more constraints and the generated one or more output indicators to generate the one or more models.

At step 510, one or more sub-models are obtained by splitting the generated one or more models. In an embodiment of the present invention, the one or more models are split to generate the one or more sub-models and associated one or more sub-jobs using a parallelization scheme. The parallelization scheme further comprises an explicit parallelization scheme and an implicit parallelization scheme.

In an exemplary embodiment pertaining to retail shelf space optimization, the one or more models are divided using the explicit parallelization scheme. The explicit parallelization scheme employs a divide and conquer algorithm which facilitates dividing the one or more models into the one or more sub-models by identifying independent jobs at fixture level. Further, the one or more jobs associated with the one or more sub-models are further divided into one or more sub-jobs using implicit parallelization scheme employing the divide and conquer algorithm at shelf-level.

At step 512, one or more optimization results associated with the one or more sub-models are generated by processing the one or more sub-models using a distributed computing framework. The distributed computing framework is, without any limitation, a grid computing framework and a cloud computing framework. In an embodiment of the present invention, the two dimensional and three dimensional visual representation of the one or more optimization results is generated. Further, the two dimensional and the three dimensional visual representation is generated using the received data, the encoded data, the generated one or more objective functions and the generated one or more constraints. In an embodiment of the present invention, the two dimensional and the three dimensional visual representation is generated using the received data including, but not limited to, data related to the one or more predetermined parameters, the reference data related to the one or more parameters and the one or more rules.

In an exemplary embodiment pertaining to retail shelf space optimization, the one or more sub-models associated with the one or more fixtures are processed using a distributed computing framework. Further, each of the one or more optimization results are generated by processing the one or more sub-models associated with the one or more fixtures. Further, each of the one or more sub-models comprises one or more jobs associated to the one or more fixtures and the one or more sub-jobs associated to the one or more shelves of the one or more fixtures. Furthermore, the one or more sub-models comprise one or more jobs and its sub-jobs that are executed to generate the one or more optimization results for the one or more fixtures and its shelves. In an embodiment of the present invention, the one or more optimization results are in the form of database tables, memory structures and spreadsheets containing, but no limited to, products allocation schemes for the associated fixture and its shelves, allocation plan of products for the associated fixture and its shelves, spreadsheet containing values of maximum utilized fixture space, allocation plan of products for the associated fixture and its shelves.

At step 514, an aggregated optimized result is generated by aggregating the one or more optimization results associated with the one or more sub-models. Further, the aggregated optimized result is used for optimization of the one or more resources. In an embodiment of the present invention the aggregated optimized result includes, but not limited to, allocation plan of products, placement plan of products, assortment plan of products and distribution plan of products.

In an exemplary embodiment pertaining to retail shelf space optimization, the generated optimization results associated with each of the one or more fixtures and its shelves are aggregated to generate an aggregated optimized result. In an embodiment of the present invention, the allocation plan of products associated with one or more fixtures and its shelves are aggregated to generate a comprehensive allocation plan for products comprising all the fixtures, shelves and product sections in a particular retail store. In an embodiment of the present invention, the aggregated optimized result is in the form of database tables, memory structures and spreadsheets containing, but not limited to, comprehensive allocation plan of products, assortment plan of products, placement plan of products and distribution plan for all the fixtures, shelves and product sections in the retail store, products allocation reports for all the fixtures, shelves and product sections and reports containing values of maximum utilized space for all the fixtures, shelves and product sections.

At step 516, the aggregated optimized result is transformed into one or more predetermined formats for rendering the aggregated optimized result on one or more display devices. In various embodiments of the present invention, the one or more predetermined formats include, but not limited to, planograms, reports, graphs and layouts.

In an exemplary embodiment pertaining to retail shelf space optimization, the comprehensive allocation plan of products, assortment plan of products, placement plan of products and distribution plan of products for all the fixtures and their shelves is transformed into appropriate output predetermined formats such as, but not limited to, planograms, reports, graphs and layouts on the user's display device. In an embodiment of the present invention, the comprehensive product allocation scheme is rendered as planograms on the one or more display devices. In another embodiment of the present invention, the user can view the values of the maximum utilized space for all the fixtures, shelves and products sections in a report format.

The present invention may be utilized to optimize one or more resources in many different domains including, but not limited to, retail, cargo, warehouse, office administration and banking.

In an embodiment of the present invention, the method may be implemented by a computer system such as the computer system 400 described in FIG. 4. Further, the present invention may be implemented as a computer program product such as a computer readable storage medium or a computer network wherein programming instructions are communicated from a remote location.

While the exemplary embodiments of the present invention are described and illustrated herein, it will be appreciated that they are merely illustrative. It will be understood by those skilled in the art that various modifications in form and detail may be made therein without departing from or offending the spirit and scope of the invention as defined by the appended claims.

## Claims

1. A system for optimization of resources, the system comprising:
a receiving engine configured to receive data related to one or more predetermined parameters and one or more rules for optimization of one or more resources;
an s-cell and s-grid generator configured to encode the received data related to the one or more predetermined parameters into one or more s-cells of one or more s-grids to obtain encoded data;
an objective function generator configured to generate one or more objective functions using the received data and the encoded data;
a constraints generator configured to generate one or more constraints using the received data and the encoded data;
an output generator configured to generate one or more output indicators using the received data and the encoded data;
a model generator configured to generate one or more models corresponding to the one or more resources, wherein the model generator generates the one or more models by aggregating the received data, the encoded data, the generated one or more objective functions, the generated one or more constraints and the generated one or more output indicators;
a model parallelizer configured to obtain one or more sub-models from the generated one or more models by splitting the one or more generated models;
an optimization controller configured to generate one or more optimization results associated with the one or more sub-models, wherein the optimization controller generates the one or more optimization results by processing the one or more sub-models using a distributed computing framework; and
an aggregator configured to aggregate the one or more optimization results associated with the one or more sub-models to generate an aggregated optimized result, wherein the aggregated optimized result is used for optimization of the one or more resources.

2. The system of claim 1, wherein the one or more resources to be optimized comprise: retail resources, cargo resources, pecuniary resources, human resources, hardware resources, network resources, software resources and infrastructure resources.

3. The system of claim 1, wherein the aggregated optimized result comprises at least one of: an allocation plan of products, a placement plan of products, an assortment plan of products and a distribution plan of products.

4. The system of claim 1, further comprising a post aggregation transformation engine configured to transform the aggregated optimized result into one or more predetermined formats for rendering the aggregated optimized result on one or more display devices, wherein the one or more predetermined formats comprise at least one of: planograms, reports, graphs and layouts.

5. The system of claim 1, further comprising an avatars generator configured to generate at least one of: a two dimensional and a three dimensional visual representation of the one or more optimization results, wherein the avatars generator facilitates generating visual representation using at least one of: the received data, the encoded data, the generated one or more objective functions and the generated one or more constraints.

6. A method of optimization of resources using a microprocessor, wherein the microprocessor is operable to execute a sequence of instructions, comprising the steps of:
receiving data related to one or more predetermined parameters and one or more rules for optimization of one or more resources;
encoding the received data related to the one or more predetermined parameters into one or more s-cells of one or more s-grids to obtain encoded data;
generating one or more objective functions, one or more constraints, and one or more output indicators using the received data and the encoded data;
generating one or more models corresponding to the one or more resources, wherein the one or more models are generated by aggregating the received data, the encoded data, the generated one or more objective functions, the generated one or more constraints and the generated one or more output indicators;
obtaining one or more sub-models from the generated one or more models by splitting the one or more generated models;
generating one or more optimization results associated with the one or more sub-models, wherein the one or more optimization results are obtained by processing the one or more sub-models using a distributed computing framework; and
aggregating the one or more optimization results associated with the one or more sub-models to generate an aggregated optimized result, wherein the aggregated optimized result is used for optimization of the one or more resources.

7. The method of claim 6, wherein the one or more resources to be optimized comprise: retail resources, cargo resources, pecuniary resources, human resources, hardware resources, network resources, software resources and infrastructure resources.

8. The method of claim 6, wherein the aggregated optimized result comprises at least one of: an allocation plan of products, a placement plan of products, an assortment plan of products and a distribution plan of products.

9. The method of claim 8, further comprising transforming the aggregated optimized result into one or more predetermined formats for rendering the aggregated optimized result on one or more display devices, wherein the one or more predetermined formats comprise at least one of: planograms, reports, graphs and layouts.

10. The method of claim 6, wherein splitting of the one or more generated models to obtain the one or more sub-models is achieved by a parallelization scheme.

11. The method of claim 6, wherein the parallelization scheme comprises at least one of: an explicit parallelization scheme and an implicit parallelization scheme.

12. The method of claim 6, wherein the distributed computing framework is at least one of: a cloud computing framework and a grid computing framework.

13. The method of claim 6, wherein encoding the data related to each of the one or more predetermined parameters occurs on a predefined axis of the one or more s-cells of the one or more s-grids.

14. The method of claim 6, wherein each parameter of the one or more predetermined parameters has at least one associated dimension and each dimension has at least one associated hierarchy.

15. The method of claim 6, further comprising the step of generating at least one of: a two dimensional and a three dimensional visual representation of the one or more optimization results, wherein the visual representation is generated using at least one of: the received data, the encoded data, the generated one or more objective functions and the generated one or more constraints.
